# EUROPEAN PATENT APPLICATION

(11) **EP 3 668 213 A1**
(43) Date of publication of application: **17.06.2020**
(21) Application number: 17920881.4
(22) Date of filing: 10.08.2017
(51) Int. Cl.: H04W 72/04, H04L 27/26, H04W 72/12

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuaki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/029223
(87) International publication number: WO 2019/030929

(57) **Abstract**

To enable activation/deactivation of one or more frequency bands (for example, BWPs) configured in a carrier to be appropriately controlled. A user terminal of the present invention includes a receiving section that monitors a control resource region in a downlink (DL) frequency band in a carrier, to receive downlink control information (DCI), and a control section that controls transmission of a uplink (UL) signal in an UL frequency band in the carrier, based on the DCI. The control section controls activation or deactivation of the UL frequency band.

## Description

### Technical Field

The present invention relates to a user terminal and a radio communication method in next-generation mobile communication systems.

### Background Art

In the Universal Mobile Telecommunications System (UMTS) network, the specifications of Long Term Evolution (LTE) have been drafted for the purpose of further increasing high speed data rates, providing lower latency, and so on (see Non-Patent Literature 1). In addition, successor systems of LTE are also under study for the purpose of achieving further broadbandization and increased speed beyond LTE (also referred to as, for example, " LTE-Advanced (LTE-A)," " Future Radio Access (FRA)," "4G," "5G," "5G+ (plus)," "New RAT (NR)," "LTE Rel. 14, Rel. 15 (or later versions)," and so on).

In existing LTE systems (for example, LTE Rel. 8 to Rel. 13), downlink (DL) and/or uplink (UL) communications are carried out using a 1-ms subframe as a unit for scheduling. This subframe is constituted of 14 symbols with subcarrier spacing of 15 kHz in a case of normal cyclic prefix (NCP), for example. The subframe is also referred to as a "transmission time interval (TTI)" and the like.

A user terminal (User Equipment (UE)) controls reception of a DL data channel (also referred to as, for example, a "Physical Downlink Shared Channel (PDSCH)," a "DL shared channel," and the like), based on downlink control information (DCI) (also referred to as "DL assignment" and the like) from a radio base station (for example, eNodeB (eNB)). Moreover, the user terminal controls transmission of a UL data channel (for example, a PUSCH (also referred to as Physical Uplink Shared Channel), a "UL shared channel" and the like), based on DCI (also referred to as "UL grant" and the like) from the radio base station.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal monitors (performs blind decoding for) control resource regions (for example, control resource sets (CORESETs)), each of which is a candidate region to which a DL control channel (for example, a Physical Downlink Control Channel (PDCCH)) is allocated, to receive (detect) DCI.

Moreover, it is studied, for the future radio communication systems, to use one or a plurality of frequency bands (for example, bandwidth parts (BWPs)) in a carrier (also referred to as a "component carrier (CC)" or a "system band," and the like) for DL and/or UL communications (DL/UL communications).

In a case that one or more frequency bands (for example, BWPs) to be used for DL/UL communications are configurable in a carrier as described above, it is desired to appropriately control activation and/or deactivation (activation/deactivation) of the frequency band in order to reduce processing load in the user terminal (for example, processing load due to blind decoding for each of the frequency bands).

The present invention has been made in view of this respect, and an object of the present invention is to provide a user terminal and a radio communication method which can appropriately control activation/deactivation of one or more frequency bands (for example, BWP(s)) configured in a carrier.

### Solution to Problem

An aspect of a user terminal according to the present invention includes a receiving section that monitors a control resource region in a downlink (DL) frequency band in a carrier, to receive downlink control information (DCI), and a control section that controls transmission of a uplink (UL) signal in an UL frequency band in the carrier, based on the DCI. The control section controls activation or deactivation of the UL frequency band.

### Advantageous Effects of Invention

According to the present invention, it is possible to appropriately control activation/deactivation of one or more frequency bands (for example, BWP(s)) configured in a carrier.

### Brief Description of Drawings

FIGS. 1A and 1B are diagrams to show configuration examples of a BWP(s);
FIG. 2 is a diagram to show an example of first activation control according to a first aspect;
FIG. 3 is a diagram to show an example of a first fallback mechanism according to the first aspect;
FIG. 4 is a diagram to show an example of a second fallback mechanism according to the first aspect;
FIG. 5 is a diagram to show an example of second activation control according to the first aspect;
FIG. 6 is a diagram to show an example of third activation control according to the first aspect;
FIGS. 7A and 7B are diagrams to show examples of deactivation control according to the first aspect;
FIG. 8 is a diagram to show an example of a configuration of a UL BWP according to a third aspect;
FIG. 9 is a diagram to show another example of a configuration of UL BWPs according to the third aspect;
FIG. 10 is a diagram to show an example of transmission of a UL signal in each UL BWP according to the third aspect;
FIG. 11 is a diagram to show an example of activation/deactivation control for a UL BWP according to the third aspect;
FIG. 12 is a diagram to show an example of a schematic structure of a radio communication system according to the present embodiment;
FIG. 13 is a diagram to show an example of an overall structure of a radio base station according to the present embodiment;
FIG. 14 is a diagram to show an example of a functional structure of the radio base station according to the present embodiment;
FIG. 15 is a diagram to show an example of an overall structure of a user terminal according to the present embodiment;
FIG. 16 is a diagram to show an example of a functional structure of the user terminal according to the present embodiment; and
FIG. 17 is a diagram to show an example of a hardware structure of the radio base station and the user terminal according to the present embodiment.

### Description of Embodiments

For future radio communication systems (for example, NR, 5G, or 5G+), it is studied to allocate a carrier (also referred to as a "component carrier (CC)," a "system band," or the like) having a wider bandwidth (for example 100 to 400 MHz) than that in existing LTE systems (for example, LTE Rel. 8 to Rel. 13). If a user terminal constantly uses the entire carrier, this may cause an enormous amount of power to be consumed. In view of this, for the future radio communication systems, it is studied to semi-statically configure one or more frequency bands in the carrier for a user terminal. Each frequency band in the carrier is also referred to as a "bandwidth part (BWP)," a "partial band," and the like.

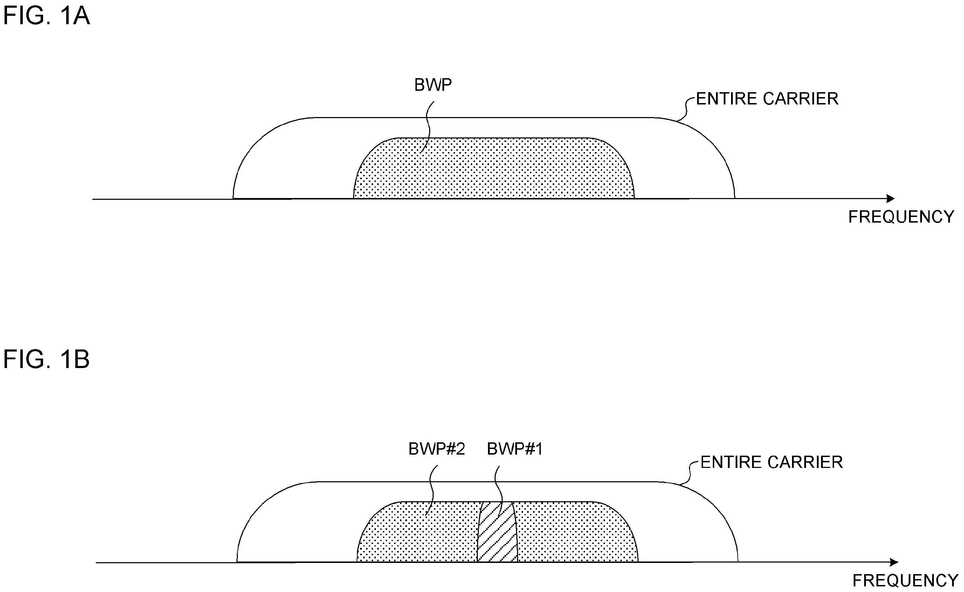

FIGS. 1A and 1B are diagrams to show configuration examples of a BWP(s). As shown in FIG. 1A, one BWP may be configured per carrier for a user terminal.

As shown in FIG. 1B, a plurality of BWPs (here, two BWPs #1 and #2) may be configured per carrier for a user terminal. As shown in FIG. 1B, the plurality of BWPs configured for the user terminal may have different bandwidths. Moreover, the plurality of BWPs may at least partially overlap each other in frequency band. For example, in FIG. 1B, BWP #1 is a part of the frequency band of BWP #2.

The user terminal may control activation/deactivation of at least one BWP. Activation of a BWP is to be in a state where the BWP is available (or changes to the state where the BWP is available) and is also referred to as "activation," "enabling," and the like of a configuration information (configuration) of the BWP (BWP configuration information). Deactivation of a BWP is to be in a state where the BWP is unusable (or changes to the state where the BWP is unusable) and is also referred to as "deactivation," "disabling," and the like of a BWP configuration information.

Note that one BWP (for example, BWP #1 in FIG. 1B) configured for the user terminal may constantly be kept active, while activation or deactivation of the other BWP(s) (for example, BWP #2 in FIG. 1B) may be controlled. Alternatively, activation or deactivation of all the BWPs (for example, both BWPs #1 and #2 in FIG. 1B) configured for the user terminal may be controlled.

Activation/deactivation of a BWP may be explicitly or implicitly performed through at least one of physical layer signaling (for example, DCI), Medium Access Control (MAC) signaling (for example, a MAC control element (MAC CE)), and RRC signaling. For example, it is studied to perform activation of a BWP through user-terminal-dedicated RRC signaling.

Alternatively, it is studied that DCI explicitly or implicitly indicates activation or deactivation of the BWP. The DCI may be DCI (DL assignment and/or UL grant) to be used for scheduling of a data channel for the user terminal or may be a different kind of DCI (for example, DCI common to one or more user terminals (group DCI or common DCI)).

In explicit indication, the DCI may include therein indication information indicating activation or deactivation. In implicit indication, the existence of DCI (for example, DL assignment and/or UL grant) itself may indicate activation or deactivation of the BWP.

Note that the BWP used in DL communication may be referred to as a "DL BWP (DL frequency band)," and the BWP used in UL communication may be referred to as a "UL BWP (UL frequency band)." The DL BWP and UL BWP may at least partially overlap each other in frequency band. Hereinafter, a DL BWP and a UL BWP are collectively referred to as a "BWP," unless specified otherwise.

At least one DL BWP (for example, a DL BWP included in a primary CC) configured for the user terminal includes a control resource region to be a candidate to which a DL control channel (DCI) is to be allocated. The control resource region may be referred to as a "control resource set (CORESET)," a "control subband," a "search space set," a "search space resource set," a "control region," a "control subband," an "NR-PDCCH region," and the like.

The user terminal monitors one or more search spaces in the CORESET to detect DCI for the user terminal. The search space may include a common search space (CSS), to which common DCI (for example, group DCI or common DCI) common to one or more user terminals is allocated, and/or a user-terminal (UE) specific search space (USS (UE-specific Search space)) to which user-terminal-specific DCI (for example, DL assignment and/or UL grant) is allocated.

The user terminal may receive configuration information of the CORESET (CORESET configuration information) through higher layer signaling (for example, RRC signaling or SIB). The CORESET configuration information may indicate at least one of frequency resources (for example, the number of RBs), time resources (for example, a starting OFDM symbol number), a time length (duration), an Resource Element Group (REG) bundle size (REG size), a transmission type (for example, interleave, non-interleave), a cycle (for example, a monitor cycle per CORESET), and the like of each CORESET.

As described above, various methods for controlling activation/deactivation of at least one BWP when one or more BWPs to be used for DL/UL communications are configurable in a carrier are under study. However, it is desired to control activation/deactivation of the at least one BWP more simply and/or at higher processing efficiency.

In view of this, the inventors of the present invention studied a method for controlling activation/deactivation of at least one BWP configured for a user terminal, more simply and/or at higher processing efficiency, and reached the present invention. In a first aspect below, a description will be mainly given of control of activation/deactivation of at least one DL BWP configured for a user terminal. In a second aspect, a description will be mainly given of a configuration of a BWP(s) (DL BWP and/or UL BWP). In a third aspect, a description will be mainly given of control of activation/deactivation of at least one UL BWP configured for a user terminal.

One embodiment of the present invention will be described below in detail with reference to the drawings. Note that, although a slot format of one slot is provided as an example in the following, this embodiment is also appropriately applicable to a slot format of a plurality of slots.

### (First Aspect)

In a first aspect, a user terminal monitors (performs blind decoding on) a CORESET (first control resource region) configured in DL BWP #1 (first frequency band) in a carrier, in a certain cycle, to receive DCI. The user terminal controls activation or deactivation of DL BWP #2 (second frequency band) in the carrier, based on the DCI.

### <First Activation Control>

In first activation control, the user terminal may monitor a single CORESET configured in a DL BWP (for example, DL BWP #1) in the carrier, in a certain cycle, to receive (detect) DCI for the DL BWP and/or DCI for a different DL BWP(s) (for example, DL BWP #2) in the carrier.

The DCI for DL BWP #2 is used for scheduling of a PDSCH (DL data channel) in a frequency resource in DL BWP #2. The user terminal activates DL BWP #2, based on the DCI for DL BWP #2. Moreover, the user terminal controls reception of the PDSCH, based on the DCI, in activated DL BWP #2.

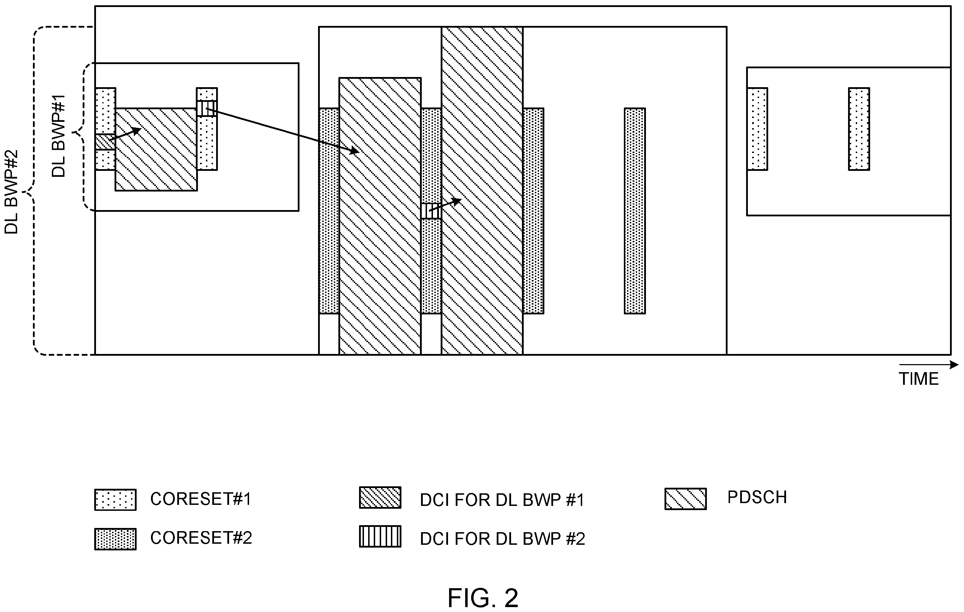

FIG. 2 is a diagram to show an example of first activation control according to the first aspect. For example, in FIG. 2, it is assumed that two DL BWPs #1 and #2 are configured in a carrier configured for the user terminal as shown in FIG. 1B. It is also assumed that DL BWP #1 is a part of the frequency band of DL BWP #2.

In FIG. 2, it is also assumed that CORESET #1 is configured in DL BWP #1 and CORESET #2 is configured in DL BWP #2. One or more search spaces are provided in each of CORESET #1 and CORESET #2. For example, in CORESET #1, DCI for DL BWP #1 and DCI for DL BWP #2 may be mapped to different search spaces.

In FIG. 2, when DL BWP #1 is in an active state, the user terminal monitors (performs blind decoding on) the DCI for DL BWP #1 and the DCI for DL BWP #2 in CORESET #1 in a certain cycle (for example, every one or more slots, every one or more mini-slots, or every certain number of symbols).

When detecting the DCI for DL BWP #1 in CORESET #1, the user terminal receives a PDSCH scheduled in (mapped to) a certain time and/or frequency resource (time/frequency resource) of DL BWP #1, based on the DCI for DL BWP #1.

In contrast, when detecting the DCI for DL BWP #2 in CORESET #1, the user terminal activates DL BWP #2. The user terminal receives a PDSCH scheduled in a certain time/frequency resource of DL BWP #2, based on the DCI for DL BWP #2 detected in CORESET #1.

Note that, although the DCI for DL BWP #1 and the DCI for DL BWP #2 are detected at different timings in CORESET #1 in FIG. 2, a plurality of pieces of DCI for the different BWPs may be detectable at the same timing. For example, a plurality of search spaces may be provided corresponding to a plurality of respective BWPs in CORESET #1, to transmit a plurality of pieces of DCI for the different BWPs in the plurality of respective search spaces. The user terminal may monitor the plurality of search spaces in CORESET #1 and detect the plurality of pieces of DCI for the different BWPs at the same timing.

When DL BWP #2 is activated, the user terminal monitors (performs blind decoding on) the DCI for DL BWP #2 in CORESET #2 in a certain cycle (for example, every one or more slots, every one or more mini-slots, or every certain number of symbols). The user terminal may receive a PDSCH scheduled in a certain time/frequency resource of DL BWP #2, based on the DCI for DL BWP #2 detected in CORESET #2.

Note that, although it is assumed in FIG. 2 that, when DL BWP #2 is activated, DL BWP #1 is deactivated, DL BWP #1 may be kept active. In addition, although a certain time is indicated for activation/deactivation switching in FIG. 2, the certain time may not necessarily be indicated.

As shown in FIG. 2, when DL BWP #2 is activated with detection of the DCI for DL BWP #2 in a CORESET in DL BWP #1 as a trigger, DL BWP #2 can be activated without explicit indication information, which can consequently prevent an increase in overhead due to activation control.

However, in FIG. 2, even if the user terminal misses detection of the DCI for DL BWP #2 (that is, the DCI for activation of DL BWP #2) in CORESET #1, a radio base station is not able to recognize the missing of detection. For this reason, the radio base station may mistakenly recognize that DL BWP #2 is available for the user terminal although the user terminal is still continuing monitoring of CORESET #1 in DL BWP #1, and transmit DCI for scheduling a PDSCH in DL BWP #2 in CORESET #2.

In this case, when the radio base station fails to receive transmission confirmation information (also referred to as "HARQ-ACK," "ACK/NACK," "A/N," and the like) for the PDSCH within a certain period, the radio base station may recognize that the user terminal has missed detection of the DCI for activation of DL BWP #2 and retransmit the DCI for activation in CORESET #1. However, with this method, usability of radio resources may decrease.

To solve a mismatch in recognition of an active BWP between the radio base station and the user terminal at an early stage, a fallback mechanism may be employed. Here, the fallback mechanism may be to provide a common CORESET in one or more BWPs (first fallback mechanism) or to continue maintaining a single activated BWP (second fallback mechanism).

### <<First Fallback Mechanism>>

In the first fallback mechanism, a common CORESET is configured in one or more BWPs configured for the user terminal, to control activation or deactivation of each BWP.

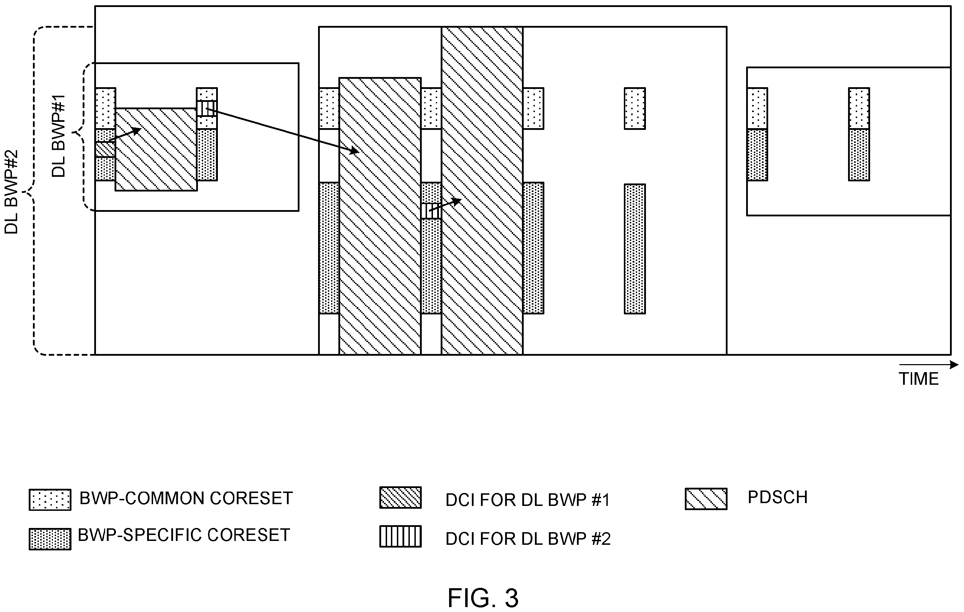

FIG. 3 is a diagram to show an example of the first fallback mechanism according to the first aspect. Note that, for FIG. 3, differences from FIG. 2 will be mainly described. FIG. 3 is different from FIG. 2 in that a CORESET (also referred to as a "BWP-common CORESET," a "common CORESET," or the like) common to one or more BWPs (here, DL BWPs #1 and #2), and a CORESET (also referred to as a "BWP-specific CORESET," a "specific CORESET," or the like) specific to each BWP are provided.

As shown in FIG. 3, the BWP-common CORESET is configured in the same frequency band (same one or more PRBs) in DL BWPs #1 and #2. In contrast, a BWP-specific CORESET may be configured in a different bandwidth (different number of PRBs) and/or a different frequency band (one or more different PRBs) for each BWP.

For example, in FIG. 3, since DL BWP #2 has a wider bandwidth than that of DL BWP #1, the CORESET specific to DL BWP #2 may include a greater number of PRBs than that for the CORESET specific to DL BWP #1.

In the BWP-common CORESET, explicit or implicit indication information for activation of a different BWP (here, DL BWP #2) may be transmitted. For example, in the BWP-common CORESET in FIG. 3, the DCI (DL assignment) for DL BWP #2 for scheduling a PDSCH in DL BWP #2 is transmitted as implicit indication information.

When the BWP-common CORESET is used as a common search space, control information for transmitting system information (SI, also referred to as a "System Information Block (SIB)" or the like) and/or a random access response (RAR), and the like may be transmitted in the BWP-common CORESET.

In contrast, in each BWP-specific CORESET, DCI for each BWP may be transmitted. For example, in the CORESET specific to DL BWP #1, DL assignment for scheduling a PDSCH in DL BWP #1 may be transmitted. Moreover, in the CORESET specific to DL BWP #2, DL assignment for scheduling a PDSCH in DL BWP #2 may be transmitted.

In FIG. 3, irrespective of which BWP is activated, the user terminal monitors the BWP-common CORESET in a certain cycle (for example, every one or more slots, every one or more mini-slots, or every certain number of symbols). For example, in FIG. 3, the user terminal activates DL BWP #2 and deactivates DL BWP #1, based on the DCI for DL BWP #2 detected in the BWP-common CORESET. The user terminal receives the PDSCH scheduled in DL BWP #2, based on the DCI for DL BWP #2.

The user terminal monitors the CORESET specific to the activated BWP in a certain cycle. For example, in FIG. 3, when DL BWP #1 is activated, the user terminal monitors the CORESET specific to DL BWP #1 in a certain cycle. The user terminal receives the PDSCH scheduled in DL BWP #1, based on the DCI for DL BWP #1 detected in the CORESET specific to DL BWP #1.

In contrast, when DL BWP #2 is activated, the user terminal monitors the CORESET specific to DL BWP #2 in a certain cycle. The user terminal receives the PDSCH scheduled in DL BWP #2, based on the DCI for DL BWP #2 detected in the CORESET specific to DL BWP #2.

In the first fallback mechanism, irrespective of which BWP is activated, the user terminal continues monitoring the BWP-common CORESET in the certain cycle. This enables the user terminal to activate, even if the user terminal misses detection of the DCI for DL BWP #2 in the BWP-common CORESET at a timing, DL BWP #2, based on the DCI for DL BWP #2 detected in a subsequent BWP-common CORESET. Hence, it is possible to solve a mismatch in recognition of an active BWP between the radio base station and the user terminal at an early stage.

### <<Second Fallback Mechanism>>

In the second fallback mechanism, a single BWP is kept active, while activation or deactivation of a different BWP(s) is controlled.

A BWP kept active is also referred to as an "active BWP," a "primary BWP," and the like. One or more BWPs for which activation or deactivation is controlled are also referred to as a "secondary BWP(s)" and the like. Note that, when a single BWP is configured in a carrier (for example, FIG. 1A), a primary BWP is configured, and no secondary BWP is configured.

A common search space and a UE-specific search space may be configured in a primary BWP. In contrast, a UE-specific search space may be configured in a secondary BWP with no common search space being configured.

The user terminal monitors the common search space in the primary BWP in a certain cycle. Moreover, the user terminal monitors UL grant in the UE-specific search space in the primary BWP in a certain cycle. Meanwhile, the user terminal may monitor DL assignment in the UE-specific search space in the primary BWP in a certain cycle, or may stop monitoring the DL assignment when a certain condition is satisfied.

For example, when a secondary BWP is configured and the secondary BWP is activated, the user terminal monitors DL assignment in a UE-specific search space in the secondary BWP without monitoring DL assignment in the UE-specific search space in the primary BWP.

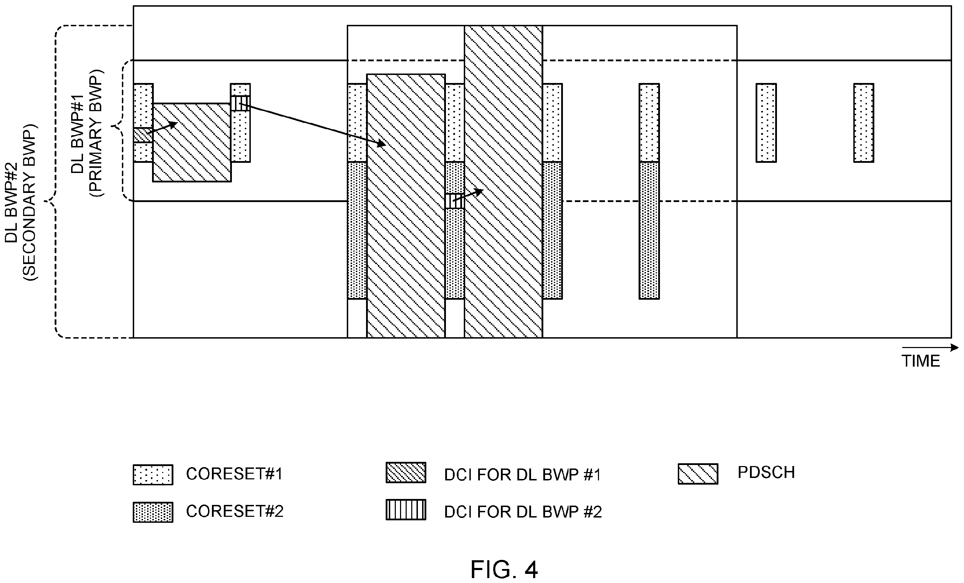

FIG. 4 is a diagram to show an example of the second fallback mechanism according to the first aspect. Note that, for FIG. 4, differences from FIG. 2 will be mainly described. FIG. 4 is different from FIG. 2 in that DL BWP #1, which is a primary BWP, is kept active while activation or deactivation of DL BWP #2, which is a secondary BWP, is controlled.

In FIG. 4, CORESET #1 may be configured in DL BWP #1, while CORESET #2 is configured in DL BWP #2. A common search space and a UE-specific search space may be included in CORESET #1. In contrast, a UE-specific search space may be included in CORESET #2 with no common search space being included in CORESET #2.

In FIG. 4, the user terminal activates DL BWP #2, based on DCI (DL assignment) for DL BWP #2 detected in the common search space in CORESET #1. The user terminal receives the PDSCH scheduled in DL BWP #2, based on the DCI for DL BWP #2.

The user terminal receives a PDSCH scheduled in DL BWP #1, based on the DCI (DL assignment) for DL BWP #1 detected in the UE-specific search space in CORESET #1.

When DL BWP #2 is activated, the user terminal monitors the UE-specific search space in CORESET #2 in a certain cycle. The user terminal receives a PDSCH scheduled in DL BWP #2, based on DCI (DL assignment) for DL BWP #2 detected in the UE-specific search space.

Note that, even when DL BWP #2 is activated, the user terminal monitors the common search space in CORESET #1 in a certain cycle. However, when DL BWP #2 is activated, the user terminal monitors UL grant in the UE-specific search space in CORESET #1 in the certain cycle while not necessarily monitoring DL assignment in the UE-specific search space in CORESET #1.

In the second fallback mechanism, irrespective of whether the secondary BWP is activated, the user terminal continues monitoring the common search space of CORESET #1, which is the primary BWP. This enables the user terminal to activate, even if the user terminal misses detection of the DCI for DL BWP #2 in CORESET #1 at a timing, DL BWP #2, based on the DCI for DL BWP #2 detected in subsequent CORESET #1. Hence, it is possible to solve a mismatch in recognition of an active BWP between the radio base station and the user terminal at an early stage.

### <Second Activation Control>

In second activation control, the user terminal monitors a CORESET for each BWP configured in a DL BWP (for example, DL DL BWP #1) in a carrier, in a certain cycle. The user terminal may receive (detect) DCI for the corresponding BWP in each CORESET. The second activation control is different from the first activation control in that a plurality of CORESETs corresponding to a plurality of respective BWPs are configured in a particular DL BWP. In the following, differences from the first activation control will be mainly described.

In the second activation control, in a case that one or more BWPs (one or more DL BWPs and/or one or more UL BWPs) are configured for the user terminal, one or more CORESETs corresponding to the one or more respective DL BWPs may be configured in at least one DL BWP.

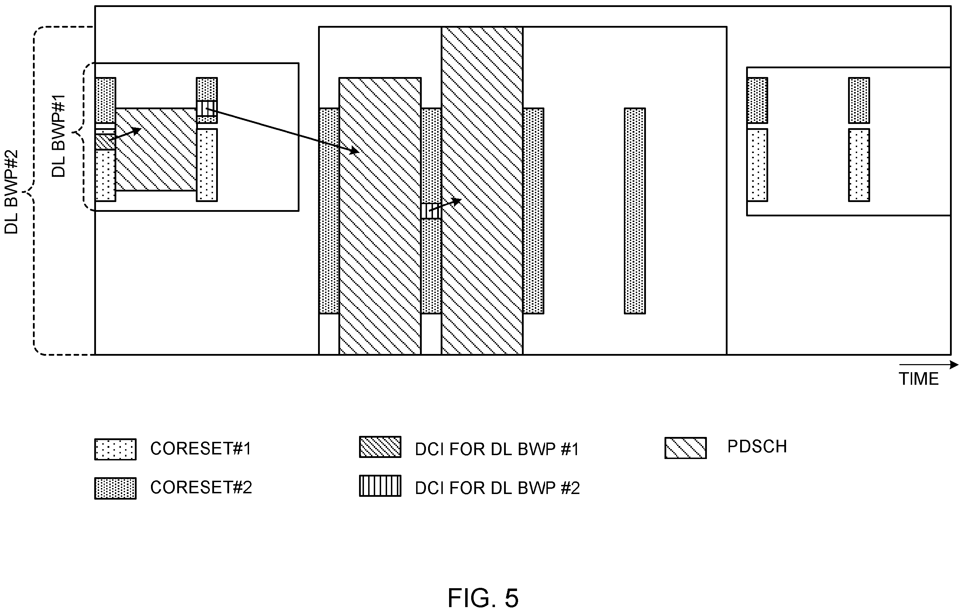

FIG. 5 is a diagram to show an example of the second activation control according to the first aspect. In FIG. 5, differences from FIG. 2 will be mainly described. FIG. 5 is different from FIG. 2 in that CORESET #1 in which the DCI for DL BWP #1 is to be transmitted and CORESET #2 in which the DCI for DL BWP #2 is to be transmitted are configured in DL BWP #1.

In FIG. 5, when DL BWP #1 is activated while DL BWP #2 is deactivated, the user terminal monitors CORESET #1 and CORESET #2 configured in DL BWP #1, in a certain cycle. Note that monitoring cycles for CORESET #1 and CORESET #2 may be the same or different from each other.

The user terminal receives a PDSCH scheduled in DL BWP #1, based on the DCI for DL BWP #1 detected in CORESET #1 in DL BWP #1.

When detecting the DCI for DL BWP #2 in CORESET #2 in DL BWP #1, the user terminal activates DL BWP #2 and deactivates DL BWP #1. The user terminal receives a PDSCH scheduled in DL BWP #2, based on the DCI for DL BWP #2 detected in CORESET #2 in DL BWP #1.

In FIG. 5, when DL BWP #1 is deactivated while DL BWP #2 is activated, the user terminal monitors CORESET #2 configured in DL BWP #2, in a certain cycle. The user terminal receives a PDSCH scheduled in DL BWP #2, based on the DCI for DL BWP #2 detected in CORESET #2 in DL BWP #2.

Note that, to solve a mismatch in recognition of an active BWP between the radio base station and the user terminal at an early stage, the above-described first fallback mechanism or second fallback mechanism may be employed even in the second activation control.

In the above second activation control, a plurality of CORESETs corresponding to a plurality of respective BWPs configured for the user terminal are configured in a certain DL BWP, and hence CORESET (corresponding to CORESET #2 in FIG. 5) resources can be used for PDSCH resources in a period where activation control is not performed.

### <Third Activation Control>

In third activation control, the user terminal may monitor a CORESET configured in a DL BWP (for example, DL BWP #1) in a carrier, in a certain cycle, to receive (detect) DCI for activation of a different DL BWP(s) (for example, DL BWP #2).

The DCI for activation indicates activation of the different DL BWP. For example, the DCI may be DCI for scheduling (DL assignment or UL grant) or may be DCI of a dedicated format. In a case that the DCI is DCI for scheduling, a particular value (for example, 0) may be configured in the resource allocation field in the DCI. An index (BWP index) of a BWP to be activated may be included in the DCI for activation.

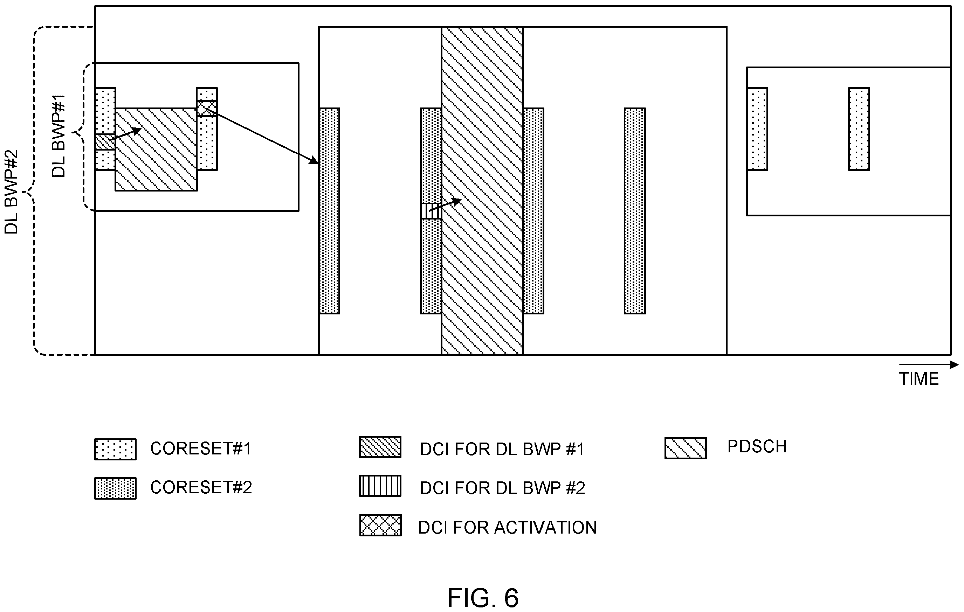

FIG. 6 is a diagram to show an example of the third activation control according to the first aspect. In FIG. 6, differences from FIG. 2 will be mainly described. FIG. 6 is different from FIG. 2 in that activation of DL BWP #2 is explicitly indicated by using the DCI for activation of DL BWP #2.

In FIG. 6, when DL BWP #1 is activated while DL BWP #2 is deactivated, the user terminal monitors CORESET #1 configured in DL BWP #1, in a certain cycle. When detecting the DCI for activation in CORESET #1, the user terminal activates DL BWP #2.

In FIG. 6, when DL BWP #2 is activated, the user terminal starts to monitor CORESET #2 in DL BWP #2 in a certain cycle. The user terminal receives a PDSCH scheduled in DL BWP #2, based on the DCI for DL BWP #2 detected in CORESET #2 in DL BWP #2.

When the DCI for activation is successfully detected, the user terminal may transmit Acknowledge (ACK) to the radio base station. For example, the user terminal may transmit the ACK by using a UL control channel (for example, a PUCCH) or a UL data channel (for example, PUSCH) of a UL BWP. After receipt of the ACK from the user terminal, the radio base station may start scheduling of a PDSCH in DL BWP #2.

Alternatively, the radio base station may start scheduling of a PDSCH in DL BWP #2, in CORESET #2 even without receipt of the ACK from the user terminal. In this case, since the user terminal is continuing monitoring of CORESET #1, the user terminal is not able to detect the DCI for DL BWP #2 for scheduling the PDSCH in DL BWP #2. In this way, the radio base station may recognize, as a result of DTX, that the user terminal missed to detect the DCI for activation.

In the above third activation control, since activation of a DL BWP is explicitly indicated, it is possible, by transmitting ACK in response to the indication, to appropriately perform activation without unnecessarily transmitting a PDSCH. Note that the above-described first fallback mechanism or second fallback mechanism may be employed even in the third activation control.

### <Deactivation Control>

A DL BWP activated through any of the first activation control to the third activation control may be deactivated by using explicit indication information for deactivation or a timer.

### <<Case of Using Explicit Indication Information>>

The explicit indication information for deactivation (deactivation indication information) may be a MAC CE or DCI. The DCI may be DCI for scheduling (DL assignment or UL grant) or may be DCI of a dedicated format. In a case that the DCI is DCI for scheduling, a particular value (for example, 0) may be configured in the resource allocation field in the DCI. An index of a BWP to be deactivated may be included in the DCI.

In a case of using explicit indication information, the BWP can be deactivated earlier than a case of using a timer.

### <<Case of Using Timer>>

In a case that a data channel (for example, a PDSCH and/or a PUSCH) is not scheduled in an activated BWP (DL BWP and/or UL BWP) for a certain time period, the user terminal may deactivate the BWP. For example, in FIGS. 2 to 6, since no PDSCH is scheduled in DL BWP #2 for the certain time period, the user terminal deactivates DL BWP #2. In FIGS. 2, 3, 5, and 6, the user terminal deactivates DL BWP #2 and activates DL BWP #1.

The user terminal may set the timer every time reception of a data channel (for example, a PDSCH and/or a PUSCH) is completed in an activated BWP, and deactivate the BWP upon expiration of the timer. The timer may be a timer (also referred to as a "joint timer" or the like) commonly used for a DL BWP and a UL BWP or may be a dedicated timer.

In a case of providing a timer for a DL BWP (DL timer) and a timer for a UL BWP (UL timer) separately, a DL symbol may be included within a certain time period until the DL timer expires without any UL symbol being included. Similarly, a UL symbol may be included within a certain time period until the UL timer expires without any DL symbol being included.

In a case of providing the DL timer and the UL timer separately, the UL BWP may be immediately deactivated upon expiration of the UL timer or may be deactivated after expiration of the DL timer. Similarly, the DL BWP may be immediately deactivated upon expiration of the DL timer or may be deactivated after expiration of the UL timer.

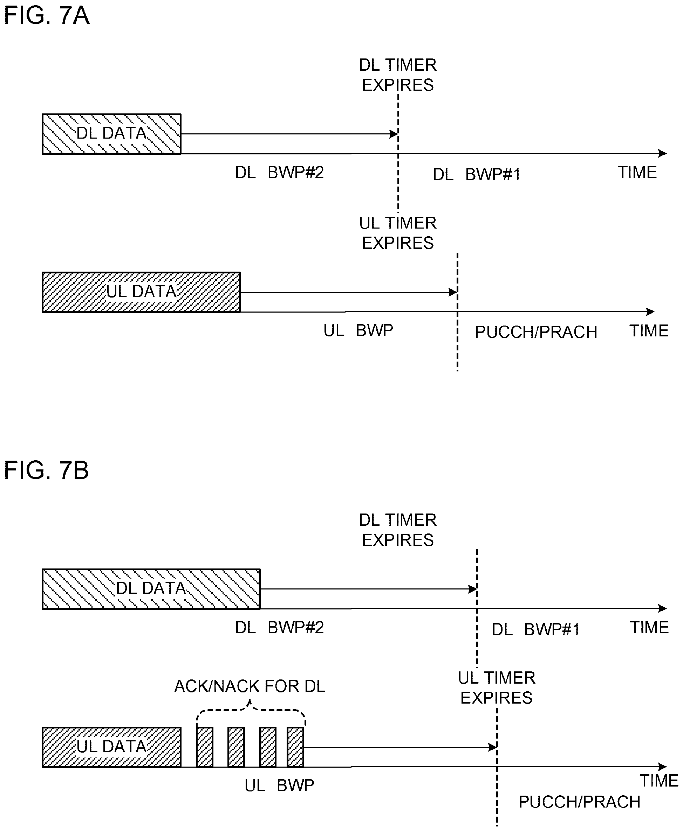

FIGS. 7A and 7B are diagrams to show examples of deactivation control according to the first aspect. In FIGS. 7A and 7B, it is assumed that it is kept active as DL BWP #1 (primary BWP) while DL BWP #2 (secondary BWP) and a UL BWP change from active to inactive.

As illustrated in FIG. 7A, in a case that UL data (PUSCH) is present in the UL BWP and the DL timer expires earlier than the UL timer, DL BWP #2 may be deactivated upon expiration of the DL timer. This is because UL grant for scheduling the UL data in the UL BWP is transmitted in DL BWP #1.

In a case that DL data (PDSCH) is present in DL BWP #2 and UL data (PUSCH) is absent in DL BWP #2, if the UL timer is set at the time when UL data is no longer present, the UL timer may expire earlier than the DL timer. In this case, if the UL BWP is deactivated in response to expiration of the UL timer, feedback of a feedback signal (for example, ACK/NACK of the DL data) may not be possible. To address this, as illustrated in FIG. 7B, the UL timer may be reset at the time when a feedback signal is generated.

In the case of using a timer(s), it is not necessary to transmit explicit indication information for deactivation, and is hence possible to reduce overhead associated with deactivation control.

### (Second Aspect)

In a second aspect, a configuration and configuration information (BWP configuration information) of a BWP will be described.

A maximum bandwidth of one or more BWPs (DL BWP(s) and/or a UL BWP(s)) configured for the user terminal may be determined based on a category of the user terminal reported from the user terminal. For example, in a case that the category reported from the user terminal indicates supporting of 100 MHz, the maximum bandwidth of at least one BWP configured for the user terminal may be 100 MHz.

A minimum bandwidth of the one or more BWPs configured for the user terminal may be the minimum bandwidth (for example, 5 MHz) supported by user terminals of any category.

In a case that no BWP is configured for the user terminal, the user terminal may monitor the entire carrier.

Each BWP may be associated with a particular numerology (for example, at least one of subcarrier spacing, symbol length, cyclic prefix (CP) length, the number of symbols in a slot (or mini-slot), and the like). For example, as illustrated in FIG. 1B, in a case that a plurality of BWPs are configured for the user terminal, the same and/or different numerologies may be used for the plurality of BWPs.

The BWP configuration information may include at least one of information indicating a numerology (for example, subcarrier spacing), information indicating a frequency position (for example, center frequency), information indicating a bandwidth (for example, the number of resource blocks (RB) (also referred to as "Physical RBs (PRBs)" and the like), information indicating time resources (for example, the number of symbols per slot (mini-slot), information indicating the number of MIMO layers, information related to Quasi-Co-Location, and the like.

The user terminal may receive BWP configuration information through higher layer signaling (for example, RRC signaling, broadcast information (master information block (MIB)), system information block (SIB), or the like and/or MAC signaling).

In a case that a plurality of BWPs are configured for the user terminal and a different slot type (for example, a different number of symbols and/or a different numerology, or the like) is used for each of the plurality of BWPs, cross-BWP scheduling, in which a particular BWP is used for scheduling of another BWP, need not necessarily be supported. In a case that the same slot type is used for the plurality of BWPs, the cross-BWP scheduling may be employed.

### (Third Aspect)

In a third aspect, a description will be given of one or more UL BWPs for the user terminal and control of activation or deactivation of the one or more UL BWPs.

Only a single UL BWP may be configured or a plurality of UL BWPs may be configured for the user terminal.

Activation or deactivation of each UL BWP may be controlled based on explicit or implicit indication information irrespective of activation or deactivation of one or more DL BWPs. For example, when detecting UL grant through monitoring of the CORESET of a DL BWP, the user terminal may activate a UL BWP. Activation or deactivation of a DL BWP may be controlled irrespective of whether UL grant is present or absent.

Alternatively, activation or deactivation of each UL BWP may be controlled with a DL BWP associated in advance. For example, when a certain DW BWP is activated, a UL BWP associated with the DL BWP may also be activated. Similarly, when a certain DW BWP is deactivated, a UL BWP associated with the DL BWP may also be deactivated.

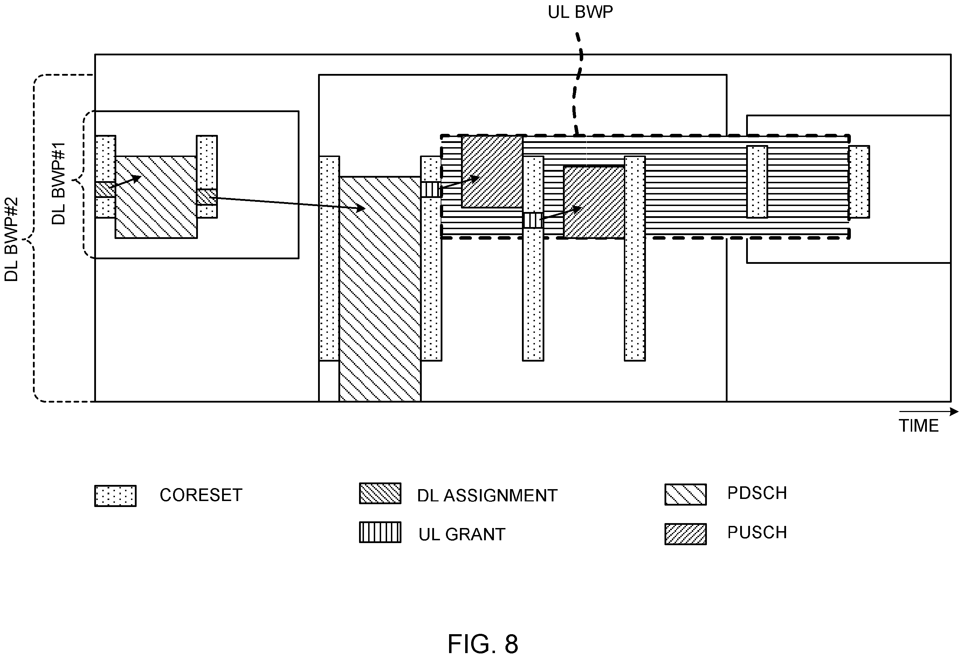

FIG. 8 is a diagram to show an example of a configuration of a UL BWP according to the third aspect. In FIG. 8, differences from FIG. 2 will be mainly described. FIG. 8 is similar to FIG. 2 in that DL BWPs #1 and #2 are configured but is different from FIG. 2 in that a single UL BWP is configured. Note that it is assumed in FIG. 8 that a single UL BWP is configured for the user terminal, but the configuration is not limited to this.

For example, in FIG. 8, the user terminal monitors a CORESET configured in an activated DL BWP, in a certain cycle. The user terminal activates a UL BWP, based on UL grant detected in the CORESET. The user terminal transmits a PUSCH scheduled in a UL BWP, based on the UL grant.

As illustrated in FIG. 8, the UL BWP may have a bandwidth (the number of PRBs) different from those of DL BWPs #1 and #2. The UL BWP may be configured for at least part of DL BWPs #1 and #2.

Even in a case that the UL BWP is deactivated, if a BWP to be used for RACH transmission, periodic CSI reporting, and the like is configured separately from the UL BWP, RACH and periodic CSI reporting may be performed without activating the UL BWP.

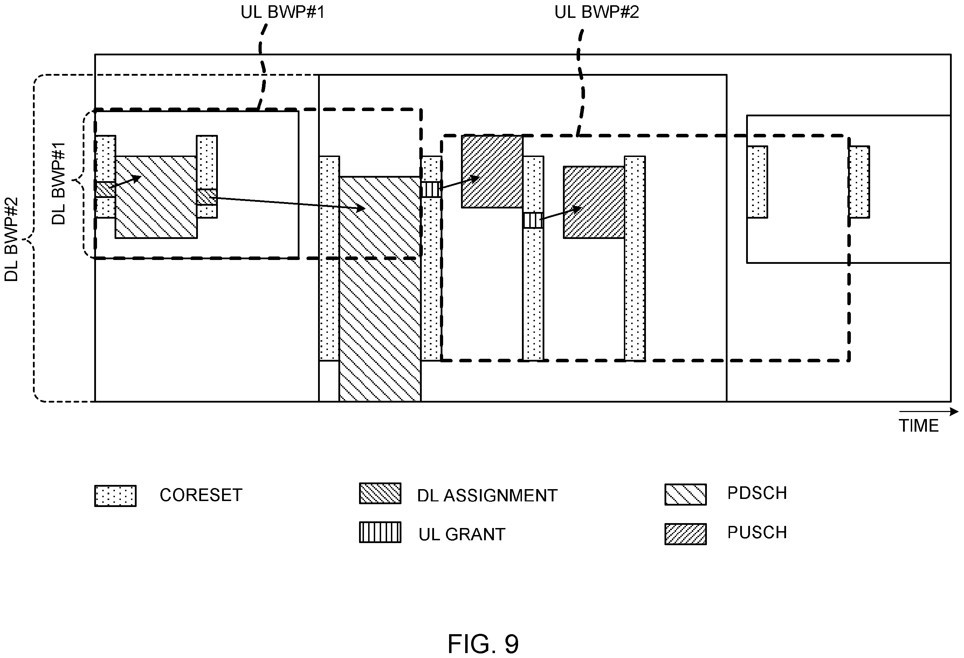

FIG. 9 is a diagram illustrating another example of the configuration of a UL BWP according to the third aspect. In FIG. 9, differences from FIG. 8 will be mainly described. FIG. 9 is different from FIG. 8 in that a plurality of UL BWPs are configured for the user terminal.

As illustrated in FIG. 9, at least one of the plurality of UL BWPs may have the same bandwidth (same PRBs) as that of at least one DL BWP. For example, in FIG. 9, UL BWP #1 is configured to have the same bandwidth (same PRBs) as that of DL BWP #1. UL BWP #2 is constituted of part of DL BWP #2.

As illustrated in FIG. 9, in a case that the plurality of UL BWPs are configured for the user terminal, an index (BWP index) of the UL BWP in which a PUSCH is scheduled may be included in UL grant. The user terminal may control activation of the UL BWPs, based on the BWP index included in the UL grant.

For example, in FIG. 9, the user terminal monitors a CORESET configured in an activated DL BWP, in a certain cycle. In FIG. 9, since BWP index #2 is included in the UL grant detected in the CORESET, the user terminal may deactivate UL BWP #1 and activate UL BWP #2. The user terminal may transmit a PUSCH scheduled in UL BWP #2, based on the UL grant.

Note that it is assumed in FIG. 9 that, when UL BWP #2 is activated, UL BWP #1 is deactivated, but the configuration is not limited to this. Even when UL BWP #2 is activated, UL BWP #1 may be kept active.

### <Use of Plurality of UL BWPs>

In a case that a plurality of UL BWPs are configured for the user terminal, transmission of the same UL signal may be possible or transmission of different UL signals may be possible among the plurality of UL BWPs. The UL signal(s) is, for example, at least one of a UL data channel (for example, a PUSCH), a UL control channel (for example, a PUCCH), a reference signal (for example, an Sounding Reference Signal (SRS) and/or a DMRS), and a random access channel (for example, a Physical Random Access Channel (PRACH)).

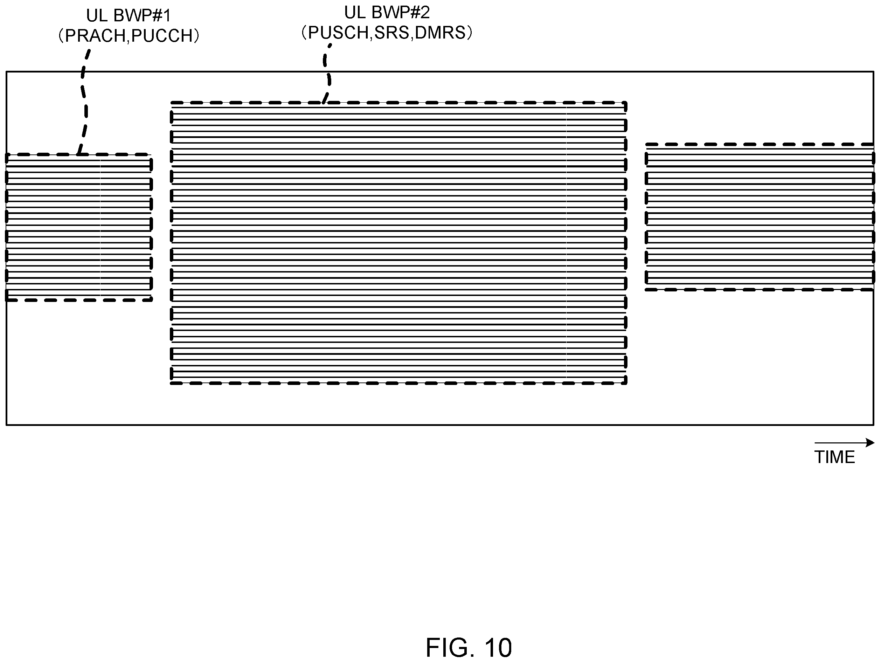

FIG. 10 is a diagram to show an example of transmission of a UL signal in each UL BWP according to the third aspect. In FIG. 10, it is assumed that UL BWP #1 and UL BWP #2 having a greater bandwidth than that of UL BWP #1 are configured for the user terminal.

As illustrated in FIG. 10, configuration information of a PRACH and/or a PUCCH is included in UL BWP #1. At the same time, configuration information of at least one of a PUSCH, an SRS, and a DMRS need not necessarily be included or may be included in UL BWP #1. Configuration information of at least one of a PUSCH, an SRS, and a DRMS is included in UL BWP #2. At the same time, configuration information of a PRACH and/or a PUCCH need not necessarily be included or may be included in UL BWP #2.

As described above, UL signals necessarily configured in UL BWPs may be different from each other, and UL signals which the user terminal can transmit in respective UL BWPs may be different from each other. For example, in FIG. 10, the user terminal may control transmission of a PRACH and/or a PUCCH in UL BWP #1 while controlling transmission of at least one of a PUSCH, an SRS, and a DMRS in UL BWP #2.

In FIG. 10, it is possible that UL signals necessarily configured in UL BWPs are different from each other, and hence when a plurality of UL BWPs are configured for the user terminal, transmission of a UL signal in each UL BWP can be performed efficiently.

### <Activation/Deactivation Control>

The user terminal may control activation and/or deactivation of one or more UL BWPs configured for the user terminal, based on explicit or implicit indication information. The explicit indication information may be, for example, DCI (UL grant) or a MAC CE including a resource allocation field configured at a particular value (for example, 0).

The implicit indication information may be, for example, a RAR, message 4, or UL grant illustrated in FIGS. 8 and 9. The RAR is transmitted from the radio base station in response to a PRACH from the user terminal. Message 4 is a contention resolution message transmitted, when the user terminal transmits a higher layer control message by using a resource indicated by UL grant included in a RAR, in response to the control message from the radio base station. The user terminal that has received message 4 changes from an idle state to an RRC connected state.

The user terminal may control deactivation of a UL BWP by using a timer (joint timer or UL timer). Control of deactivation of a UL BWP by using the timer is as has been described with reference to FIG. 7 and the like.

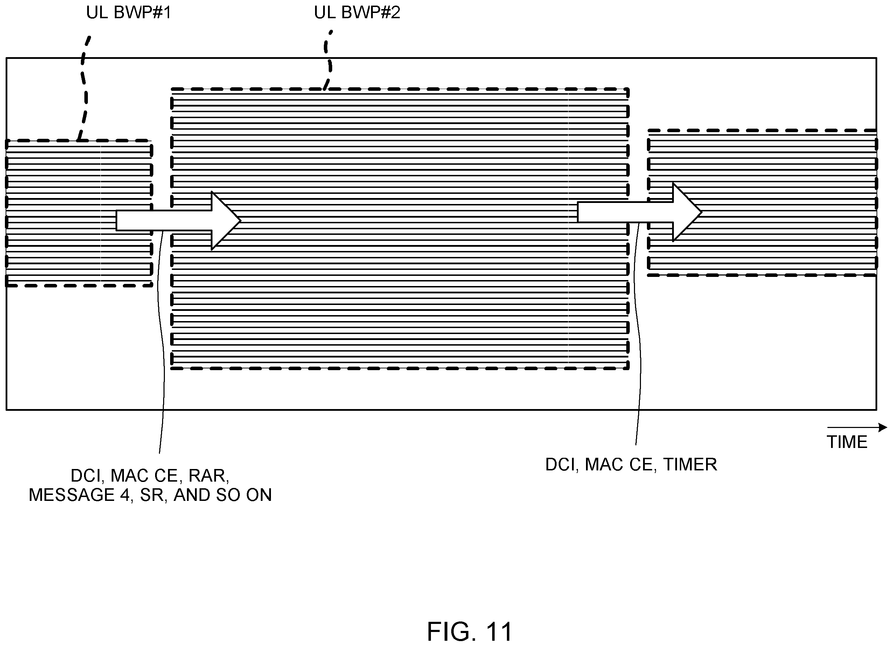

FIG. 11 is a diagram to show an example of activation/deactivation control for a UL BWP according to the third aspect. In FIG. 11, the user terminal may activate UL BWP #2, based on DCI (for example, UL grant allocating a PUSCH in UL BWP #2 or DCI for activation (for example, UL grant with a resource allocation field being configured at a particular value)), a MAC CE, a RAR, or message 4. In this case, the user terminal may deactivate UL BWP #1.

In FIG. 11, the user terminal may deactivate UL BWP #2, based on deactivation indication information (for example, a MAC CE or DCI) or a timer. In this case, the user terminal may activate UL BWP #1.

Note that, although an active BWP is changed in FIG. 11, a single UL BWP (for example, UL BWP #1) may be constantly kept active.

### (Radio Communication System)

Hereinafter, a structure of a radio communication system according to the present embodiment will be described. In this radio communication system, the radio communication method according to each of the above-described aspects is employed. The radio communication method according to each of the above-described aspects may be employed independently or may be employed in combination.

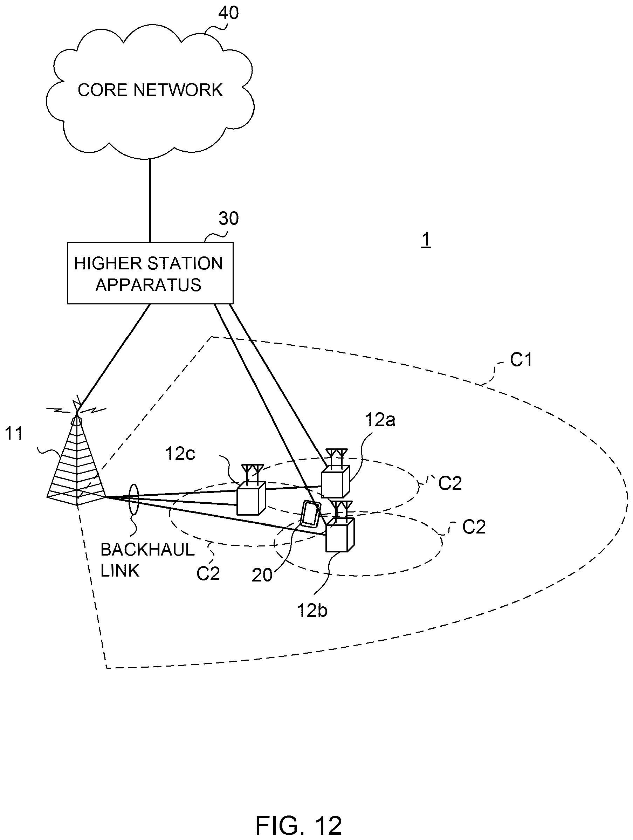

FIG. 12 is a diagram to show an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may be referred to as "Super 3G," "LTE-Advanced (LTE-A)," "IMT-Advanced," "4G," "5G," "Future Radio Access (FRA)," "New RAT (NR)," and the like.

The radio communication system 1 illustrated in FIG. 12 includes a radio base station 11 that forms a macro cell C1 and radio base stations 12a to 12c that form small cells C2, which are placed within the macro cell C1 and which are narrower than the macro cell C1. Also, user terminals 20 are placed in the macro cell C1 and in the small cells C2. A configuration of using different numerologies among cells may be employed. Note that a numerology may be at least one of subcarrier spacing, symbol length, cyclic prefix (CP) length, the number of symbols per transmission time interval (TTI), and TTI time length. A slot may be a time unit based on the numerology used by a user terminal. The number of symbols per slot may be determined according to subcarrier spacing.

Each user terminal 20 can connect with both the radio base station 11 and the radio base stations 12. It is assumed that the user terminal 20 use the macro cell C1 and the small cells C2, which use different frequencies, at the same time by means of CA or DC. The user terminal 20 can apply CA or DC by using a plurality of cells (CCs) (for example, two or more CCs). The user terminal can use a licensed band CC and an unlicensed band CC as the plurality of cells.

The user terminal 20 can perform communication by using time division duplex (TDD) or frequency division duplex (FDD) in each cell (carrier). A cell using TDD may be referred to as a "TDD carrier (second type of frame structure)" and the like, and a cell using FDD may be referred to as an "FDD carrier (first type of frame structure)" and the like.

In each cell (carrier), a slot having a relatively long time length (for example, 1 ms) (also referred to as a "TTI," "normal TTI," "long TTI," "normal subframe," "long subframe," "subframe," or the like) and/or a slot having a relatively short time length (also referred to as a "mini-slot," "short TTI," "short subframe," or the like) may be applied. In each cell, a slot having two or more time lengths may be applied.

Between the user terminals 20 and the radio base station 11, communication can be carried out by using a carrier of a relatively low frequency band (for example, 2 GHz) and a narrow bandwidth (referred to as, for example, an "existing carrier," a "Legacy carrier," and so on). Meanwhile, between the user terminals 20 and the radio base stations 12, a carrier of a relatively high frequency band (for example, 3.5 GHz, 5 GHz, 30 to 70 GHz, and so on) and a wide bandwidth may be used, or the same carrier as that used between the user terminals 20 and the radio base station 11 may be used. Note that the structure of the frequency band for use in each radio base station is by no means limited to these. One or more BWPs may be configured for the user terminal 20. A BWP is constituted of at least part of a carrier.

A configuration of a wired connection (for example, an optical fiber in compliance with the Common Public Radio Interface (CPRI), an X2 interface and the like) or a wireless connection may be used between the radio base station 11 and the radio base stations 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point," and so on. The radio base stations 12 are radio base stations having local coverages, and may be referred to as "small base stations," "micro base stations," "pico base stations," "femto base stations," "Home eNodeBs (HeNBs)," "Remote Radio Heads (RRHs)," "transmitting/receiving points," and so on. Hereinafter, the radio base stations 11 and 12 will be collectively referred to as "radio base stations 10," unless specified otherwise.

Each user terminal 20 is a terminal that supports various communication schemes such as LTE and LTE-A, and may include not only mobile communication terminals but stationary communication terminals. Each user terminal 20 can perform device-to-device communication (D2D) with another user terminal 20.

In the radio communication system 1, as a radio access scheme, Orthogonal Frequency Division Multiple Access (OFDMA) can be applied to downlink (DL), and Single-Carrier Frequency Division Multiple Access (SC-FDMA) can be applied to uplink (UL). OFDMA is a multi-carrier communication scheme to perform communication by dividing a frequency band into a plurality of narrow frequency bands (subcarriers) and mapping data to each subcarrier. SC-FDMA is a single carrier transmission scheme to mitigate interference between terminals by dividing the system bandwidth into bands constituted of one or continuous resource blocks per terminal, and allowing a plurality of terminals to use mutually different bands. Note that the uplink and downlink radio access schemes are by no means limited to the combinations of these, and OFDMA may be used in UL. SC-FDMA can be employed for sidelink (SL) used for inter-terminal communication.

In the radio communication system 1, a DL data channel (also referred to as a "Physical Downlink Shared Channel (PDSCH)," a "DL shared channel," and the like), which is used by the user terminals 20 on a shared basis, a broadcast channel (Physical Broadcast Channel (PBCH)), L1/L2 control channels, and so on, are used as DL channels. DL data (at least one of user data, higher layer control information, System Information Blocks (SIBs), and so on are transmitted on the PDSCH. Master Information Blocks (MIBs) are transmitted on the PBCH.

The L1/L2 control channels include a DL control channel (Physical Downlink Control Channel (PDCCH) and/or an Enhanced Physical Downlink Control Channel (EPDCCH)), a Physical Control Format Indicator Channel (PCFICH), a Physical Hybrid-ARQ Indicator Channel (PHICH), and so on. Downlink control information (DCI) including scheduling information of the PDSCH and PUSCH, and so on are transmitted on the PDCCH. The number of OFDM symbols to use for the PDCCH is transmitted on the PCFICH. The EPDCCH is frequency-division multiplexed with the PDSCH and used to transmit DCI and so on, like the PDCCH. Transmission confirmation information (also referred to as "A/N," "HARQ-ACK," an "HARQ-ACK bit," "A/N codebook," and the like) of the PUSCH can be transmitted on the PHICH.

In the radio communication system 1, a UL data channel (also referred to as "Physical Uplink Shared Channel (PUSCH)," a "UL shared channel," and the like) which is used by the user terminals 20 on a shared basis, a UL control channel (Physical Uplink Control Channel (PUCCH)), a random access channel (Physical Random Access Channel (PRACH)), and so on are used as UL channels. UL data (user data and/or higher layer control information) is transmitted on the PUSCH. Uplink control information (UCI) including at least one of transmission confirmation information (A/N, HARQ-ACK) for the PDSCH, channel state information (CSI), and the like is transmitted on the PUSCH or the PUCCH. A random access preamble for establishing a connection with a cell can be transmitted on the PRACH.

### <Radio Base Station>

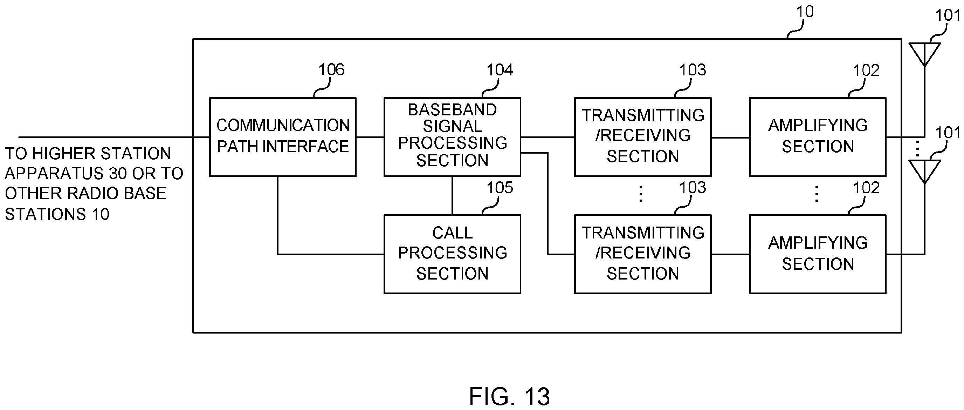

FIG. 13 is a diagram to show an example of an overall structure of the radio base station according to the present embodiment. The radio base station 10 includes a plurality of transmitting/receiving antennas 101, amplifying sections 102, transmitting/receiving sections 103, a baseband signal processing section 104, a call processing section 105, and a transmission line interface 106. Note that the radio base station 10 may be configured to include one or more transmitting/receiving antennas 101, one or more amplifying sections 102 and one or more transmitting/receiving sections 103. The radio base station 10 may configure "receiving apparatus" in UL and configure "transmitting apparatus" in DL.

User data to be transmitted from the radio base station 10 to the user terminal 20 in downlink is input from the higher station apparatus 30 to the baseband signal processing section 104, via the transmission line interface 106.

In the baseband signal processing section 104, the user data is subjected to transmission processes, such as at least one of a Packet Data Convergence Protocol (PDCP) layer process, division and coupling of the user data, Radio Link Control (RLC) layer transmission processes such as RLC retransmission control, Medium Access Control (MAC) retransmission control (for example, an Hybrid Automatic Repeat reQuest (HARQ) process), scheduling, transport format selection, channel coding, rate matching, scrambling, an inverse fast Fourier transform (IFFT) process, and a precoding process, and the result is forwarded to each transmitting/receiving section 103. Furthermore, downlink control signals are also subjected to transmission processes such as channel coding and/or inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands, and transmit the result. The radio frequency signals having been subjected to frequency conversion in the transmitting/receiving sections 103 are amplified in the amplifying sections 102, and are transmitted from the transmitting/receiving antennas 101.

The transmitting/receiving section 103 can be constituted with transmitters/receivers, transmitting/receiving circuits, or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signals through frequency conversion and outputs the baseband signals to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and is forwarded to the higher station apparatus 30 via the transmission line interface 106. The call processing section 105 performs at least one of call processing such as setting up, releasing, and so on for communication channels, management of the state of the radio base station 10, and management of the radio resources.

The transmission line interface 106 transmits and/or receives signals to and/or from the higher station apparatus 30 via a certain interface. The transmission line interface 106 may transmit and/or receive signals (backhaul signaling) with an adjacent radio base station 10 via an inter-base station interface (for example, an optical fiber in compliance with the Common Public Radio Interface (CPRI) and an X2 interface).

Each transmitting/receiving section 103 transmits DL signals (for example, at least one of a DL control signal (also referred to as a "DL control channel," "DCI," and the like), DL data signals (also referred to as a "DL data channel," "DL data," and the like), and a reference signal). The transmitting/receiving section 103 also receives UL signals (for example, at least one of a UL control signal (also referred to as a "UL control channel," "UCI," and the like), UL data signals (also referred to as a "UL data channel," "UL data," and the like), and a reference signal).

The transmitting/receiving section 103 may transmit higher layer control information (for example, control information through a MAC CE and/or RRC signaling).

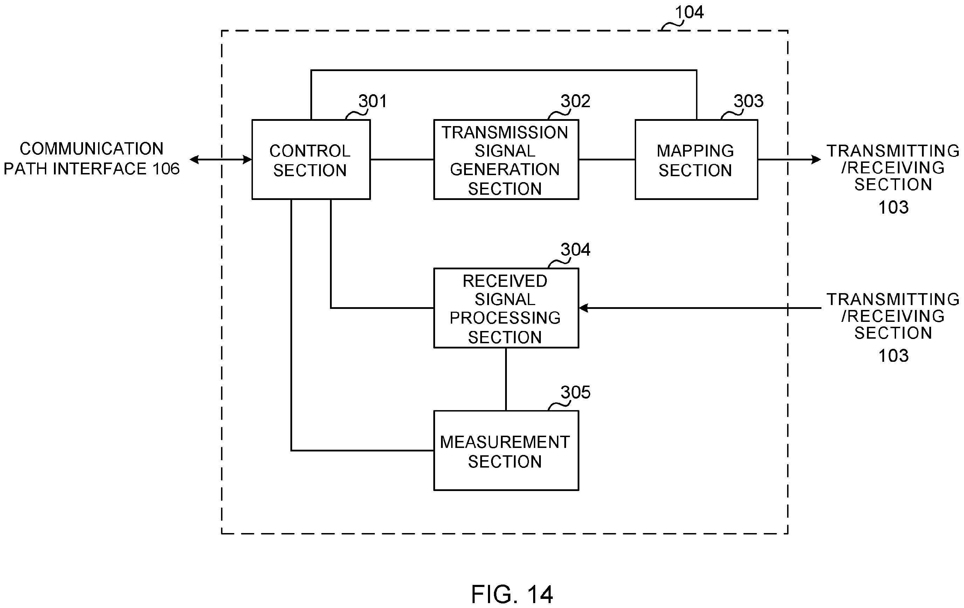

FIG. 14 is a diagram to show an example of a functional structure of the radio base station according to the present embodiment. Note that FIG. 14 primarily shows functional blocks that pertain to characteristic parts of the present embodiment, and it is assumed that the radio base station 10 may include other functional blocks that are necessary for radio communication as well. As illustrated in FIG. 14, the baseband signal processing section 104 includes a control section 301, a transmission signal generation section 302, a mapping section 303, a received signal processing section 304, and a measurement section 305.

The control section 301 controls the whole of the radio base station 10. The control section 301 controls, for example, at least one of generation of a DL signal by the transmission signal generation section 302, mapping of a DL signal by the mapping section 303, reception processes (for example, demodulation and the like) of a UL signal by the received signal processing section 304, and measurement by the measurement section 305. The control section 301 may also control scheduling of a data channel (including a DL data channel and/or a UL data channel).

The control section 301 may control a transmission direction for each symbol in a time unit (for example, a slot) serving as a scheduling unit for a DL data channel. Specifically, the control section 301 may control generation and/or transmission of slot format related information (SFI) indicating a DL symbol and/or a UL symbol in each slot.

The control section 301 may control configuration of one or more BWPs (one or more DL BWPs and/or one or more UL BWPs) for the user terminal 20. Specifically, the control section 301 may control generation and/or transmission of BWP configuration information (second aspect).

The control section 301 may control activation or deactivation of one or more BWPs (one or more DL BWPs and/or one or more UL BWPs) (DL frequency band and/or UL frequency band in a carrier) configured for the user terminal 20. Specifically, the control section 301 may control generation and/or transmission of explicit or implicit indication information of the one or more BWPs (first and third aspects).

The control section 301 may control configuration of one or more CORESETs (control resource region(s)) in one or more DL BWPs. The control section 301 may control configuration of a search space in one or more CORESETs.

The control section 301 can be constituted with a controller, a control circuit, or control apparatus that can be described based on general understanding of the technical field to which the present invention pertains.

The transmission signal generation section 302 may generate DL signals (including at least one of pieces of control information through DL data (channel), DCI, a DL reference signal, and higher layer signaling), based on indication from the control section 301 and output the generated DL signals to the mapping section 303.

The transmission signal generation section 302 can be a signal generator, a signal generation circuit, or signal generation apparatus that can be described based on general understanding of the technical field to which the present invention pertains.

The mapping section 303 maps the DL signals generated in the transmission signal generation section 302 to certain radio resources, based on commands from the control section 301, and outputs these to the transmitting/receiving sections 103. For example, the mapping section 303 uses a mapping pattern determined by the control section 301 to map a reference signal to a certain radio resource.

The mapping section 303 can be a mapper, a mapping circuit, or mapping apparatus that can be described based on general understanding of the technical field to which the present invention pertains.

The received signal processing section 304 performs receiving processes (for example, at least one of demapping, demodulation, decoding, and so on) of UL signals transmitted from the user terminals 20. Specifically, the received signal processing section 304 may output the received signals and/or the signals after the receiving processes to the measurement section 305.

The received signal processing section 304 can be constituted with a signal processor, a signal processing circuit, or signal processing apparatus that can be described based on general understanding of the technical field to which the present invention pertains. The received signal processing section 304 can constitute the receiving section according to the present invention.

The measurement section 305 may, for example, measure the channel quality of UL, based on a received power (for example, Reference Signal Received Power (RSRP)) and/or reception quality (for example, Reference Signal Received Quality (RSRQ)) of the reference signal. The measurement results may be output to the control section 301.

### <User Terminal>

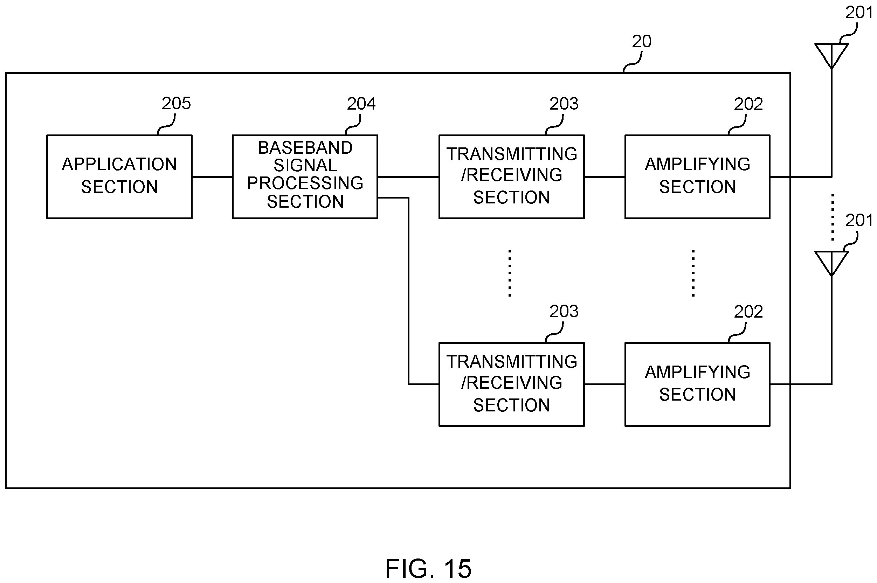

FIG. 15 is a diagram to show an example of an overall structure of a user terminal according to the present embodiment. Each user terminal 20 includes a plurality of transmitting/receiving antennas 201 for MIMO transmission, amplifying sections 202, transmitting/receiving sections 203, a baseband signal processing section 204, and an application section 205. The user terminal 20 may configure "transmitting apparatus" in UL and configure "receiving apparatus" in DL.

Radio frequency signals that are received in the plurality of respective transmitting/receiving antennas 201 are amplified in the respective amplifying sections 202. The transmitting/receiving sections 203 receive the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, at least one of an FFT process, error correction decoding, a retransmission control receiving process, and so on. The DL data is forwarded to the application section 205. The application section 205 performs processes related to higher layers above the physical layer and the MAC layer, and so on.

Meanwhile, the UL data is input from the application section 205 to the baseband signal processing section 204. The baseband signal processing section 204 performs at least one of a retransmission control process (for example, an HARQ process), channel coding, rate matching, puncture, a discrete Fourier transform (DFT) process, an IFFT process, and so on, and the result is forwarded to each of the transmitting/receiving sections 203. At least one of channel coding, rate matching, puncture, a DFT process, an IFFT process, and the like is also performed on UCI (for example, at least one of A/N, channel state information (CSI), scheduling request (SR), and the like of a DL signal), and the result is forwarded to each of the transmitting/receiving sections 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and are transmitted from the transmitting/receiving antennas 201.

The transmitting/receiving sections 203 receive DL signals (for example, at least one of a DL control signal (also referred to as a "DL control channel," "DCI," and the like)), DL data signals (also referred to as a "DL data channel," "DL data," and the like), and a reference signal). The transmitting/receiving sections 203 also transmit UL signals (for example, at least one of a UL control signal (also referred to as a "UL control channel," "UCI," or the like)), UL data signals (also referred to as a "UL data channel," "UL data," or the like), and a reference signal).

The transmitting/receiving sections 203 may receive higher layer control information (for example, control information through a MAC CE and/or RRC signaling).

The transmitting/receiving sections 203 can be transmitters/receivers, transmitting/receiving circuits, or transmitting/receiving apparatus that can be described based on general understanding of the technical field to which the present invention pertains. The transmitting/receiving sections 203 may be structured as transmitting/receiving sections in one entity, or may be constituted with transmitting sections and receiving sections.

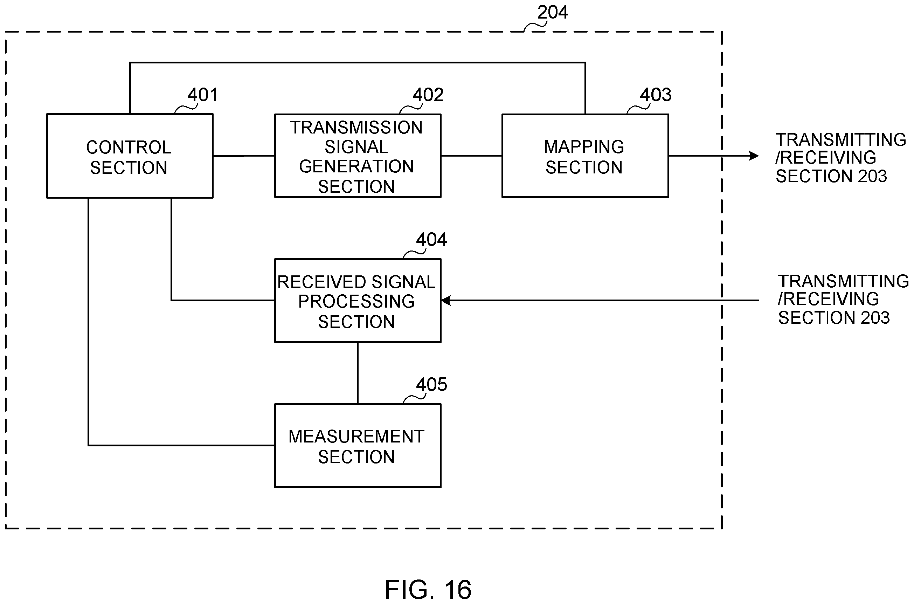

FIG. 16 is a diagram to show an example of a functional structure of a user terminal according to the present embodiment. Note that FIG. 16 primarily shows functional blocks that pertain to characteristic parts of the present embodiment, and it is assumed that each user terminal 20 may include other functional blocks that are necessary for radio communication as well. As shown in FIG. 16, the baseband signal processing section 204 included in the user terminal 20 includes a control section 401, a transmission signal generation section 402, a mapping section 403, a received signal processing section 404, and a measurement section 405.

The control section 401 controls the whole of the user terminal 20. The control section 401 controls, for example, at least one of generation of a UL signal by the transmission signal generation section 402, mapping of a UL signal by the mapping section 403, a reception process of a DL signal by the received signal processing section 404, and measurement by the measurement section 405.

The control section 401 may control configuration of one or more BWPs (one or more DL BWPs and/or one or more UL BWPs) in the carrier. Specifically, the control section 401 may configure the one or more BWPs, based on BWP configuration information from the radio base station 20 (second aspect).

The control section 401 may control configuration of one or more CORESETs (control resource region(s)) in one or more DL BWPs. The control section 401 may control configuration of a search space in one or more CORESETs.

The control section 401 may control monitoring (blind decoding) of the CORESET(s) (or a search space(s) in the CORESET(s)) (control resource region(s)) and detection of DCI (at least one of DL assignment, UL grant, group DCI, shared DCI, activation DCI, and deactivation DCI) for the user terminal 20.

The control section 401 may control a transmission direction for each symbol in a time unit (for example, a slot) serving as a scheduling unit for a DL data channel. Specifically, the control section 401 may determine a DL symbol and/or a UL symbol in each slot, based on SFI.

The control section 401 may control activation or deactivation of one or more BWPs (one or more DL BWPs and/or one or more UL BWPs) (DL frequency band and/or UL frequency band in a carrier) configured for the user terminal 20 (first and third aspects).

Specifically, the control section 401 may control activation of DL BWP #2 (second DL frequency band), based on DCI (DL assignment for scheduling a PDSCH in DL BWP #2) detected in the CORESET in DL BWP #1 (first DL frequency band) (first aspect). The control section 401 may control reception of the PDSCH (DL data channel), based on the DCI, in DL BWP #2 to be activated based on the DCI (first and second activation control).

The control section 401 may monitor a control resource region configured in DL BWP #2 to be activated based on the DCI (DCI indicating activation of DL BWP #2) detected in a MAC CE or the CORESET in DL BWP #1, to control reception of different DCI to be used for scheduling of the DL data channel in DL BWP #2 (third activation control).

The control section 401 may control deactivation of DL BWP #2 (second DL frequency band), based on DCI, a MAC control element, or a certain timer (first aspect).

The control section 401 may control transmission of a UL signal in a UL BWP (UL frequency band), based on the DCI detected in the CORESET (control resource region) in a DL BWP (DL frequency band) (third aspect).

The control section 401 may control activation or deactivation of one or more UL BWPs (UL frequency band(s)). Note that at least one UL BWP may be configured in the same frequency band as that of at least one DL BWP (DL frequency band) (third aspect).

The control section 401 may control transmission of a random access channel and/or a UL control channel in UL BWP #1 (first UL frequency band) and control transmission of at least one of a UL data channel, a sounding reference signal, and a demodulation reference signal in UL BWP #2 (second UL frequency band) (third aspect).

The control section 401 may control activation of the UL BWP, based on any of DCI, a Medium Access Control (MAC) control element, a random access response or contention resolution message, or a DL BWP (DL frequency band) associated with a UL BWP (UL frequency band) (third aspect).

The control section 401 may control deactivation of a UL BWP (UL frequency band), based on DCI, a MAC control element, or a certain timer.

The control section 401 can be constituted with a controller, a control circuit, or control apparatus that can be described based on general understanding of the technical field to which the present invention pertains.

The transmission signal generation section 402 generates a UL signal and retransmission control information of a DL signal (for example, coding, rate matching, puncture, modulation, and the like), based on commands from the control section 401 and outputs the retransmission control information to the mapping section 403. The transmission signal generation section 402 can be a signal generator, a signal generation circuit, or signal generation apparatus that can be described based on general understanding of the technical field to which the present invention pertains.

The mapping section 403 maps UL signals and retransmission control information of DL signals generated in the transmission signal generation section 402 to radio resources, based on commands from the control section 401, and outputs the result to the transmitting/receiving sections 203. For example, the mapping section 403 uses a mapping pattern determined by the control section 401 to map a reference signal to a certain radio resource.

The mapping section 403 can be a mapper, a mapping circuit, or mapping apparatus that can be described based on general understanding of the technical field to which the present invention pertains.

The received signal processing section 404 performs receiving processes (for example, at least one of demapping, demodulation, decoding, and so on) of DL signals. For example, the received signal processing section 404 may demodulate a DL data channel by using a reference signal of a mapping pattern determined by the control section 401.

The received signal processing section 404 may output received signals and/or signals after receiving processes to the control section 401 and/or the measurement section 405. The received signal processing section 404 outputs, for example, higher layer control information through higher layer signaling, L1/L2 control information (for example, UL grant and/or DL assignment), and the like to the control section 401.

The received signal processing section 404 can be constituted with a signal processor, a signal processing circuit, or signal processing apparatus that can be described based on general understanding of the technical field to which the present invention pertains. The received signal processing section 404 can constitute a receiving section according to the present invention pertains.

The measurement section 405 measures a channel state, based on a reference signal (for example, a CSI-RS) from the radio base station 10, and outputs the measurement result to the control section 401. Note that measurement of a channel state may be performed for each CC.

The measurement section 405 can be constituted with a signal processor, a signal processing circuit, or signal processing apparatus and a measurement device, a measurement circuit, or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. The means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

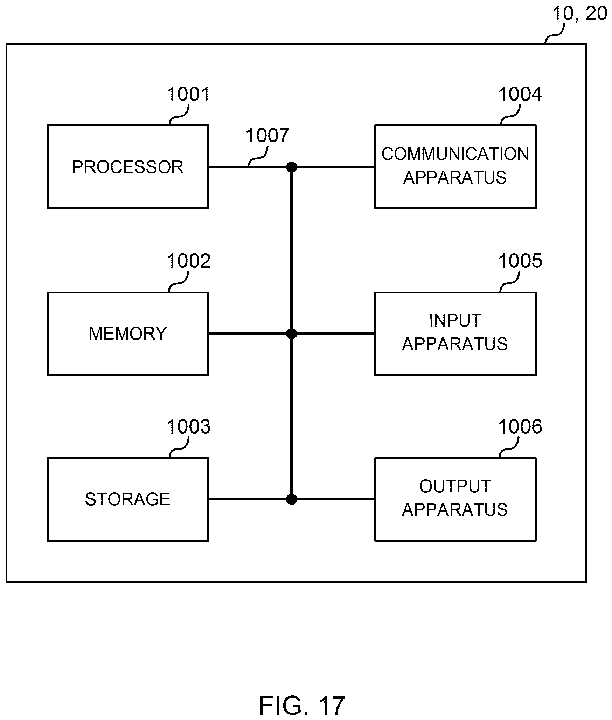

For example, a radio base station, a user terminal, and so on according to the present embodiment may function as a computer that executes the processes of the radio communication method of the present invention. FIG. 17 is a diagram to show an example of a hardware structure of the radio base station and the user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of pieces of apparatus shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control at least one of communication by the communication apparatus 1004 and reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an Light Emitting Diode (LED) lamp, and so on). Note that the input apparatus 1005 and the output apparatus 1006 may be provided in an integrated structure (for example, a touch panel).

The pieces of apparatus shown in FIG. 17 are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an Application Specific Integrated Circuit (ASIC), a Programmable Logic Device (PLD), an Field Programmable Gate Array (FPGA), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals (signaling)." Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology. A slot may include a plurality of mini-slots. Each mini-slot may be constituted of one or a plurality of symbols in the time domain.

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms.

Here, a TTI refers to the minimum time unit of scheduling in radio communication, for example. For example, in LTE systems, a radio base station schedules the allocation of radio resources (such as a frequency bandwidth and/or transmission power available for each user terminal) for the user terminal in TTI units. Note that the definition of TTIs is not limited to this. TTIs may be transmission time units for channel-encoded data packets (transport blocks), or may be the unit of processing in scheduling, and/or link adaptation, and so on. Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," and so on. A TTI that is shorter than a normal TTI may be referred to as a "shortened TTI," a "short TTI," a "partial or fractional TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that an RB may be referred to as a "physical resource block (Physical RB (PRB))," a "PRB pair," an "RB pair," and the like.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices. Furthermore, mathematical expressions that use these parameters, and so on may be different from those expressly disclosed in this specification.

The names used for parameters and so on in this specification are in no respect limiting. For example, since various channels (Physical Uplink Control Channel (PUCCH), Physical Downlink Control Channel (PDCCH), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed in a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and may be performed in other methods. For example, reporting of information may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and may be, for example, an RRC connection setup (RRCConnectionSetup) message, an RRC connection reconfiguration (RRCConnectionReconfiguration) message, and so on. Also, MAC signaling may be reported in, for example, MAC control elements (MAC CEs).

Reporting of certain information (for example, reporting of "X holds") does not necessarily have to be performed explicitly, and may be reported implicitly (by, for example, not reporting the certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification are used interchangeably.

In this specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of a base station and/or a base station subsystem that provides communication services within this coverage.

In this specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell," and so on.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (Device-to-Device (D2D)). In this case, the user terminals 20 may have the functions of the radio base station 10 described above. In addition, "uplink" and/or "downlink" may be interpreted as "side." For example, an uplink channel may be interpreted as a side channel.

Likewise, the user terminals in this specification may be interpreted as radio base stations. In this case, the radio base station 10 may have the functions of the user terminals 20 described above.

Particular actions which have been described in this specification to be performed by a base station may, in some cases, be performed by upper nodes. In a network constituted of one or a plurality of network nodes with base stations, it is clear that various operations that are performed to communicate with terminals can be performed by base stations, one or more network nodes (for example, Mobility Management Entities (MMEs), Serving-Gateways (S-GW), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although methods have been illustrated in this specification with various components of steps in exemplary orders, the specific orders that are illustrated herein are by no means limiting.

The aspects/embodiments illustrated in this specification may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical connection, logical connection, or a combination thereof. In the use in this specification, two elements may be considered "connected" or "coupled" to each other by using one or more electrical wires, cables and/or printed electrical connections, and, as some nonlimiting and non-inclusive examples, by using electromagnetic energy having wavelengths in radio frequency regions, microwave regions, (both visible and invisible) optical regions, or the like.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Hence, the description in this specification is provided only for the purpose of explaining examples, and should by no means be construed to limit the present invention in any way.

## Claims

1. A user terminal comprising:
a receiving section that monitors a control resource region in a downlink (DL) frequency band in a carrier, to receive downlink control information (DCI); and
a control section that controls transmission of a uplink (UL) signal in an UL frequency band in the carrier, based on the DCI, wherein
the control section controls activation or deactivation of the UL frequency band.

2. The user terminal according to claim 1, wherein
the UL frequency band is configured to be a same frequency band as at least one DL frequency band in the carrier.

3. The user terminal according to claim 1 or 2, wherein
the UL frequency band includes first and second UL frequency bands, and
the control section controls transmission of a random access channel and/or a UL control channel in the first UL frequency band and controls transmission of at least one of a UL data channel, a sounding reference signal, and a demodulation reference signal in the second UL frequency band.

4. The user terminal according to any one of claims 1 to 3, wherein
the control section controls activation of the UL frequency band, based on any of the DCI, a Medium Access Control (MAC) control element, a random access response or contention resolution message received by the receiving section, or a DL frequency band associated with the UL frequency band.

5. The user terminal according to any one of claims 1 to 4,
wherein the control section controls deactivation of the UL frequency band, based on the DCI or a MAC control element received by the receiving section, or a certain timer.

6. A radio communication method comprising, in a user terminal:
monitoring a control resource region in a downlink (DL) frequency band in a carrier, to receive downlink control information (DCI);
controlling transmission of a uplink (UL) signal in an UL frequency band in the carrier, based on the DCI; and
controlling activation or deactivation of the UL frequency band.
